# EUROPEAN PATENT APPLICATION

(11) **EP 4 563 660 A1**
(43) Date of publication of application: **04.06.2025**
(21) Application number: 23846063.8
(22) Date of filing: 19.06.2023
(51) Int. Cl.: C08L 77/06, C08G 69/26, C08L 23/26

(54) **RESIN COMPOSITION AND MOLDED ARTICLE**

(30) Priority: 25.07.2022 JP 2022117987
(71) Applicant: MITSUBISHI GAS CHEMICAL COMPANY, INC., Chiyoda-ku Tokyo 100-8324 (JP)
(72) Inventor: ISHIHARA TOMITA, Eri, Hiratsuka-shi, Kanagawa 254-0016 (JP); SHIMADA NAKAMURA, Jin, Hiratsuka-shi, Kanagawa 254-0016 (JP); ODA, Takafumi, Hiratsuka-shi, Kanagawa 254-0016 (JP)
(74) Representative: Vossius & Partner Patentanwälte Rechtsanwälte mbB
(86) International application number: PCT/JP2023/022541
(87) International publication number: WO 2024/024329

(57) **Abstract**

A resin composition includes from 0.1 to 50 parts by mass of an acid-modified polyolefin with respect to 100 parts by mass of a polyamide resin, the polyamide resin containing a diamine unit and a dicarboxylic acid unit, the diamine unit containing 70 mol% or more of structural units derived from a xylylenediamine, and the dicarboxylic acid unit containing 70 mol% or more of structural units derived from an α,ω-linear aliphatic dicarboxylic acid having from 11 to 20 carbon atoms.

## Description

### Technical Field

The present invention relates to a resin composition and a molded article. In particular, it relates to a resin composition using a polyamide resin as a major component.

### Background Art

For the purpose of reduction in weight of a molded article made of a metal, reduction in cost, and the like, a molded article made of a resin is used. In particular, a polyamide resin having excellent properties such as thermal resistance, chemical resistance, rigidity, abrasion resistance, and moldability is used in various applications.

However, a molded article of a polyamide resin has issues in flexibility and impact resistance depending on an application. Thus, as a method for improving flexibility and impact resistance of a polyamide resin, an impact resistance-improving material such as polyolefin is sometimes blended (Patent Document 1 and the like).

### Citation List

### Patent Document

Patent Document 1: JP H09-087475 A

### Summary of Invention

### Technical Problem

However, when a different kind of resin such as a polyolefin is mixed to enhance the flexibility and impact resistance of the polyamide resin, a crystallization rate tends to decrease. In particular, if it is possible to increase the crystallization rate even when a mold is cold, it would be beneficial.

An object of the present invention is to solve the above-described issues and to provide a polyamide resin composition excellent in flexibility and impact resistance and capable of sufficiently progressing crystallization even at a relatively low temperature, and a molded article.

### Solution to Problem

As a result of studies conducted in response to the issues described above, the present inventors have found that the above-described issues can be solved by blending a predetermined polyamide resin diacid-modified polyolefin. Specifically, the issues described above are solved by the following means.
<1> A resin composition, including
   from 0.1 to 50 parts by mass of an acid-modified polyolefin with respect to 100 parts by mass of a polyamide resin,
   the polyamide resin containing a diamine unit and a dicarboxylic acid unit, the diamine unit containing 70 mol% or more of structural units derived from a xylylenediamine, and the dicarboxylic acid unit containing 70 mol% or more of structural units derived from an α,ω-linear aliphatic dicarboxylic acid having from 11 to 20 carbon atoms.
<2> The resin composition according to <1>, wherein 70 mol% or more of the dicarboxylic acid unit is derived from dodecanedioic acid and/or tetradecanedioic acid.
<3> The resin composition according to <1>, wherein 70 mol% or more of the dicarboxylic acid unit is derived from dodecanedioic acid.
<4> The resin composition according to any one of <1> to <3>, wherein from 20 to 100 mol% of the diamine unit is derived from m-xylylenediamine, and from 80 to 0 mol% of the diamine unit is derived from p-xylylenediamine.
<5> The resin composition according to <1>, wherein 70 mol% or more of the dicarboxylic acid unit is derived from dodecanedioic acid and/or tetradecanedioic acid, and
   from 20 to 100 mol% of the diamine unit is derived from m-xylylenediamine, and from 80 to 0 mol% of the diamine unit is derived from p-xylylenediamine.
<6> The resin composition according to any one of <1> to <5>, wherein the acid-modified polyolefin includes a maleic anhydride-modified polyolefin.
<7> A molded article formed from the resin composition according to any one of <1> to <6>.

### Advantageous Effects of Invention

According to the present invention, it has become possible to provide a polyamide resin composition excellent in flexibility and impact resistance and capable of progressing crystallization even at a relatively low temperature, and a molded article.

### Description of Embodiments

Embodiments for carrying out the present invention (hereinafter referred to simply as "the present embodiment") will next be described in detail. The present embodiment described below is an example for describing the present invention, and the present invention is not limited only to the present embodiment.

In the present specification, numerical values described before and after the term "to" are respectively the lower limit and the upper limit of a range including the numerical values.

In the present specification, various physical property values and characteristic values are those at 23°C unless otherwise noted.

In the present specification, the number average molecular weight can be measured according to the description in paragraph 0047 of JP 2018-165298 A, the contents of which are incorporated herein, unless otherwise noted.

In the present specification, the melting point (Tm) is a value measured by differential scanning calorimetry (DSC) in accordance with ISO 11357, unless otherwise specified. Specifically, the melting point (Tm) can be measured according to the description in paragraph 0036 of WO 2016/084475, the contents of which are incorporated herein by reference.

When a measurement method described in a standard set forth in the present specification differs depending on the year, it is based on the standard as of January 1, 2022 unless otherwise stated.

A resin composition of the present embodiment contains from 0.1 to 50 parts by mass of an acid-modified polyolefin with respect to 100 parts by mass of a polyamide resin, characterized in that the polyamide resin contains a diamine unit and a dicarboxylic acid unit, the diamine unit containing 70 mol% or more of structural units derived from a xylylenediamine, and the dicarboxylic acid unit containing 70 mol% or more of structural units derived from an α,ω-linear aliphatic dicarboxylic acid having from 11 to 20 carbon atoms.

Through such a configuration, it is possible to obtain a polyamide resin composition excellent in flexibility and impact resistance and capable of sufficiently progressing crystallization even at a relatively low temperature. In particular, a resin composition excellent in impact resistance at a cold temperature can be obtained. In addition, it is possible to obtain a resin composition which is excellent in moldability and gives a molded article having a small amount of an eluate and excellent in chemical resistance.

In general, when a different kind of resin such as a polyolefin is blended into a polyamide resin, the crystallization rate tends to decrease. However, in the present invention, surprisingly, the crystallization rate is improved by blending an acid-modified polyolefin into a predetermined xylylenediamine-based polyamide resin. The reason for this was presumed to be that when an acid-modified polyolefin is used, an acid group of the polyolefin reacts with a terminal amide group of the xylylenediamine-based polyamide resin. That is, it was presumed that crystallization was promoted with the reaction site as a starting point. In addition, it was presumed that an aliphatic chain length of the xylylenediamine-based polyamide resin used in the present embodiment acted in a favorable direction for compatibility with the polyolefin. In particular, as indicated in Examples described below, a polyamide resin synthesized from a xylylenediamine and sebacic acid (10 carbon atoms) is inferior in crystallization rate, and thus the effect of the present invention is extremely surprising.

### Xylylenediamine-based Polyamide Resin

The resin composition of the present embodiment contains a polyamide resin containing diamine units and dicarboxylic acid units, in which the diamine units contain 70 mol% or more of structural units derived from a xylylenediamine, and the dicarboxylic acid units contain 70 mol% or more of structural units derived from an α,ω-linear aliphatic dicarboxylic acid having from 11 to 20 carbon atoms (in the present specification, sometimes referred to as "xylylenediamine-based polyamide resin"). By using the xylylenediamine-based polyamide resin, a resin composition having a high crystallization rate can be obtained even when a polyolefin is blended.

In the xylylenediamine-based polyamide resin, more preferably 75 mol% or more, still more preferably 80 mol% or more, even more preferably 90 mol% or more, even still more preferably 95 mol% or more, and particularly even more preferably 99 mol% or more of the diamine-derived structural units are derived from a xylylenediamine (preferably p-xylylenediamine and/or m-xylylenediamine).

More specifically, in the xylylenediamine, from 20 to 100 mol% of the diamine-derived structural unit is preferably a structural unit derived from m-xylylenediamine, from 50 to 100 mol% of the diamine-derived structural unit is preferably a structural unit derived from m-xylylenediamine, and it is more preferable that from 55 to 80 mol% of the diamine-derived structural unit is a structural unit derived from m-xylylenediamine, and from 45 to 20 mol% of the diamine-derived structural unit is a structural unit derived from p-xylylenediamine. When the proportion of p-xylylenediamine is 20 mol% or more, there is a tendency that the crystallization rate is increased and the impact resistance of the obtained molded article is improved. In addition, the amount of an eluate from the molded article can be reduced by reducing the proportion of m-xylylenediamine.

In the xylylenediamine-based polyamide resin, the total of the structural units derived from p-xylylenediamine and the structural units derived from m-xylylenediamine accounts for preferably 80 mol% or more, more preferably 85 mol% or more, still more preferably 90 mol% or more, even more preferably 95 mol% or more, even still more preferably 98 mol% or more, and yet even still more preferably 99 mol% or more of the diamine-derived structural units. The upper limit of the total of the structural units derived from p-xylylenediamine and the structural units derived from m-xylylenediamine is 100 mol%.

Examples of a diamine that can be used as a raw material diamine component of the xylylenediamine-based polyamide resin, other than m-xylylenediamine and p-xylylenediamine, include an aliphatic diamine, such as tetramethylenediamine, pentamethylenediamine, 2-methylpentanediamine, hexamethylenediamine, heptamethylenediamine, octamethylenediamine, nonamethylenediamine, decamethylenediamine, dodecamethylenediamine, 2,2,4-trimethylhexamethylenediamine, and 2,4,4-trimethylhexamethylenediamine; an alicyclic diamine, such as 1,3-bis(aminomethyl)cyclohexane, 1,4-bis(aminomethyl)cyclohexane, 1,3-diaminocyclohexane, 1,4-diaminocyclohexane, bis(4-aminocyclohexyl)methane, 2,2-bis(4-aminocyclohexyl)propane, bis(aminomethyl)decalin, and bis(aminomethyl)tricyclodecane; and a diamine having an aromatic ring, such as bis(4-aminophenyl)ether, p-phenylenediamine, and bis(aminomethyl)naphthalene. One of these can be used alone, or two or more can be mixed and used.

Meanwhile, in the xylylenediamine-based polyamide resin, preferably 75 mol% or more, still more preferably 80 mol% or more, even more preferably 90 mol% or more, even still more preferably 95 mol% or more, and particularly more preferably 99 mol% or more of the dicarboxylic acid-derived structural units are derived from an α,ω-linear aliphatic dicarboxylic acid having from 11 to 20 carbon atoms (preferably an α,ω-linear aliphatic dicarboxylic acid having from 11 to 15 carbon atoms and more preferably an α,ω-linear aliphatic dicarboxylic acid having from 12 to 14 carbon atoms).

Examples of the α,ω-linear aliphatic dicarboxylic acid having from 11 to 20 carbon atoms that is preferably used as the raw material dicarboxylic acid component of the xylylenediamine-based polyamide resin include an aliphatic dicarboxylic acid, such as undecanedioic acid, dodecanedioic acid, tridecanedioic acid, tetradecanedioic acid, pentadecanedioic acid, hexadecanedioic acid, heptadecanedioic acid, octadecanedioic acid, nonadecanedioic acid, and icosanedioic acid. One type thereof can be used, or two or more types thereof can be mixed and used. Among these, dodecanedioic acid and/or tetradecanedioic acid is preferable.

A preferred embodiment of the xylylenediamine-based polyamide resin of the present embodiment is, for example, a polyamide resin in which 70 mol% or more (preferably 80 mol% or more, more preferably 90 mol% or more, and still more preferably 95 mol% or more) of the dicarboxylic acid-derived structural units are derived from dodecanedioic acid and/or tetradecanedioic acid (preferably dodecanedioic acid). Dodecanedioic acid and a xylylenediamine may be raw materials derived from organisms (biomass raw materials).

Furthermore, in the above-described embodiment, it is preferable that from 20 to 100 mol% of the diamine unit is derived from m-xylylenediamine and from 80 to 0 mol% is derived from p-xylylenediamine, and it is more preferable that from 55 to 80 mol% of the diamine unit is derived from m-xylylenediamine and from 45 to 20 mol% is derived from p-xylylenediamine.

Examples of the dicarboxylic acid component other than the α,ω-linear aliphatic dicarboxylic acid having from 11 to 20 carbon atoms can include phthalic acid compounds such as isophthalic acid, terephthalic acid, and orthophthalic acid; and naphthalenedicarboxylic acid isomers such as 1,2-naphthalenedicarboxylic acid, 1,3-naphthalenedicarboxylic acid, 1,4-naphthalenedicarboxylic acid, 1,5-naphthalenedicarboxylic acid, 1,6-naphthalenedicarboxylic acid, 1,7-naphthalenedicarboxylic acid, 1,8-naphthalenedicarboxylic acid, 2,3-naphthalenedicarboxylic acid, 2,6-naphthalenedicarboxylic acid, and 2,7-naphthalenedicarboxylic acid. One of these can be used, or two or more thereof can be mixed and used.

Note that the xylylenediamine-based polyamide resin includes a diamine-derived structural unit and a dicarboxylic acid-derived structural unit as main components, but structural units other than these are not entirely excluded. Of course, the xylylenediamine-based polyamide resin may contain a structural unit derived from a lactam such as ε-caprolactam or laurolactam, or from an aliphatic aminocarboxylic acid such as aminocaproic acid or aminoundecanoic acid. As used herein, the term "main components" indicates that, of the structural units constituting the xylylenediamine-based polyamide resin, the total number of the diamine-derived structural units and the dicarboxylic acid-derived structural units is the largest among all the structural units. In the present embodiment, the total of the diamine-derived structural units and the dicarboxylic acid-derived structural units in the xylylenediamine-based polyamide resin preferably accounts for 90 mass% or more, more preferably 95 mass% or more, still more preferably 97 mass% or more, and even more preferably 99 mass% or more of all the structural units.

The xylylenediamine-based polyamide resin preferably has a melting point of preferably 180°C or higher, more preferably 190°C or higher, still more preferably 195°C or higher, and even more preferably 200°C, may have a melting point of 201°C or higher, and has a melting point of preferably 280°C or lower and more preferably 240°C or lower.

The lower limit of a number average molecular weight (Mn) of the xylylenediamine-based polyamide resin is preferably 6000 or more, more preferably 8000 or more, and still more preferably 10000 or more, and is preferably 35000 or less, more preferably 30000 or more, and still more preferably 25000 or less. The polyamide with a number average molecular weight in such a range provides better thermal resistance, elastic modulus, dimensional stability, and molding processability.

The content of the xylylenediamine-based polyamide resin in the resin composition of the present embodiment is preferably 50 mass% or more, more preferably 55 mass% or more, still more preferably 60 mass% or more, and even more preferably 64 mass% or more of the resin composition, and may be 70 mass% or more. Setting the melting point to equal to or more than the lower limits described above tends to result in improved moldability. The content of the xylylenediamine-based polyamide resin in the resin composition of the present embodiment is preferably 95 mass% or less, more preferably 90 mass% or less, still more preferably 85 mass% or less, and even more preferably 80 mass% or less of the resin composition. Setting the content equal to or less than the upper limit described above tends to result in improved impact resistance and increased crystallization rate.

The resin composition of the present embodiment may contain only one type of a xylylenediamine-based polyamide resin, or may contain two or more types thereof. When two or more types of xylylenediamine-based polyamide resins are contained, the total amount thereof preferably falls within the above-described range.

The resin composition of the present embodiment may contain a polyamide resin other than the xylylenediamine-based polyamide resin in a range not departing from the scope of the present invention.

The other polyamide resin is not particularly specified, and a known polyamide resin can be used. The polyamide resin may be an aliphatic polyamide resin or a semi-aromatic polyamide resin.

Examples of the aliphatic polyamide resin include polyamide 4, polyamide 46, polyamide 6, polyamide 66, polyamide 666, polyamide 610, polyamide 612, polyamide 11, and polyamide 12.

Examples of the semi-aromatic polyamide resin include terephthalic acid-based polyamide resins (polyamide 6T, polyamide 9T, polyamide 10T, and polyamide 6I6T) and polyamide resins composed of a xylylenediamine and an α,ω-linear aliphatic dicarboxylic acid having less than 10 carbon atoms (MXD6, MP6, and the like).

In a case where these other polyamide resins are contained, they are preferably contained in a proportion of 0.1 to 10 mass% of the resin composition.

In the resin composition of the present embodiment, the total of the xylylenediamine-based polyamide resin and the acid-modified polyolefin accounts for preferably 90 mass% or more, more preferably 95 mass% or more, still more preferably 96 mass%, even more preferably 97 mass% or more, and even still more preferably 98 mass% or more of the resin composition.

### Acid-Modified Polyolefin

The resin composition of the present embodiment contains from 0.1 to 50 parts by mass of the acid-modified polyolefin with respect to 100 parts by mass of the polyamide resin. When the acid-modified polyolefin is contained, the flexibility and impact resistance of the resulting molded article can be improved.

The acid-modified polyolefin used in the present embodiment is obtained by, for example, acid-modifying a polyolefin. Acid modification refers to reaction of an acid derivative with a polyolefin in some manner. Specifically, the acid-modified polyolefin used in the present embodiment is obtained by grafting an acid derivative to the main chain of a polyolefin or by incorporating the acid derivative into the main chain of the polyolefin. In the present embodiment, the polyolefin is preferably a graft polymer in which an acid derivative is grafted to the main chain of the polyolefin.

The acid derivative is preferably an acid or an acid anhydride, more preferably an unsaturated carboxylic acid or an anhydride of an unsaturated carboxylic acid, and still more preferably an anhydride of an unsaturated carboxylic acid. The unsaturated carboxylic acid is preferably an unsaturated dicarboxylic acid, and an anhydride of the unsaturated carboxylic acid is also preferably an anhydride of the unsaturated dicarboxylic acid.

As the acid derivative, maleic acid, maleic anhydride, itaconic acid, itaconic anhydride, 5-norbornene-2,3-dicarboxylic acid, 5-norbornene-2,3-dicarboxylic anhydride, endic acid, endic anhydride, citraconic acid, citraconic anhydride, 1-butene-3,4-dicarboxylic acid, and 1-butene-3,4-dicarboxylic anhydride are more preferable, maleic acid and maleic anhydride are still more preferable, and maleic anhydride is even more preferable.

The method of modifying the copolymer with the acid derivative can be carried out by a known technique and is not particularly limited. For example, a method of copolymerizing the acid derivative and a monomer which is a raw material of the copolymer, a method of grafting the acid derivative to the copolymer, or the like can be used.

Note that in the resin composition of the present embodiment, the xylylenediamine-based polyamide resin may be bonded to the acid-modified polyolefin.

The acid-modified polyolefin is preferably obtained by acid-modifying a copolymer containing a structural unit derived from ethylene and a structural unit derived from an α-olefin having from 3 to 20 carbon atoms with an acid derivative. Through such a configuration, the impact resistance can be more effectively improved.

As the α-olefin having from 3 to 20 carbon atoms, an α-olefin having from 3 to 10 carbon atoms is preferable, an α-olefin having from 3 to 8 carbon atoms is more preferable, an α-olefin having from 3 to 5 carbon atoms is still more preferable, and an α-olefin having 3 or 4 carbon atoms is even more preferable. Specific examples of the α-olefin having from 3 to 20 carbon atoms include propylene, 1-butene, 1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene, 1-eicosene, 3-methyl-1-butene, 3-methyl-1-pentene, 3-ethyl-1-pentene, 4-methyl-1-pentene, 4-methyl-1-hexene, 4,4-dimethyl-1-hexene, 4,4-dimethyl-1-pentene, 4-ethyl-1-hexene, 3-ethyl-1-hexene, 9-methyl-1-decene, 11-methyl-1-dodecene, and 12-ethyl-1-tetradecene, and propylene and 1-butene are preferred.

The copolymer containing the structural unit derived from ethylene and the structural unit derived from an α-olefin having from 3 to 20 carbon atoms may contain only one type of repeating unit derived from an α-olefin having from 3 to 20 carbon atoms, or may contain two or more types of repeating units derived from an α-olefin having from 3 to 20 carbon atoms. The copolymer may be a random copolymer or a block copolymer.

The copolymer contains the structural unit derived from an α-olefin having from 3 to 20 carbon atoms in a proportion of preferably from 6 to 25 mol%, more preferably from 8 to 22 mol%, and still more preferably from 10 to 20 mol%, of all structural units. Through such a configuration, the impact resistance can be more effectively improved.

In addition, the copolymer contains the structural unit derived from ethylene in a proportion of preferably from 94 to 75 mol%, more preferably from 92 to 78 mol%, and still more preferably from 90 to 80 mol%, of all the structural units.

Furthermore, the copolymer may contain a structural unit other than the structural unit derived from ethylene and the structural unit derived from the α-olefin having from 3 to 20 carbon atoms. In a case where the acid-modified polyolefin used in the present embodiment contains another structural unit, the content thereof is preferably in a range of 10 mol% or less of all the structural units of the copolymer.

Specific examples of the copolymer include an ethylene/propylene copolymer, an ethylene/butene copolymer, an ethylene/hexene copolymer, an ethylene/propylene/dicyclopentadiene copolymer, and an ethylene/propylene/5-ethylidene-2-norbornene copolymer, and an ethylene/butene copolymer is preferable.

An example of the acid-modified polyolefin used in the present embodiment is a maleic anhydride-modified polyolefin, and preferably a maleic anhydride-modified ethylene/propylene copolymer, ethylene/butene copolymer, ethylene/hexene copolymer, ethylene/propylene/dicyclopentadiene copolymer, or ethylene/propylene/5-ethylidene-2-norbornene copolymer.

The acid modification rate in the acid-modified polyolefin used in the present embodiment is preferably 0.3 mass% or more, more preferably 0.4 mass% or more, still more preferably 0.5 mass% or more, even more preferably 0.6 mass% or more, even still more preferably 0.8 mass% or more, and particularly more preferably 0.9 mass% or more. With such a range, the impact resistance can be more effectively improved. On the other hand, the upper limit value of the acid modification rate is preferably 4.0 mass% or less, more preferably 3.5 mass% or less, still more preferably 3.0 mass% or less, and even more preferably 2.5 mass% or less. Setting the acid modification rate to the upper limit value described above or less tends to improve dispersibility of the acid-modified polyolefin.

Note that the modification rate by the acid derivative (acid modification rate) in the present embodiment is measured in accordance with the description in paragraph 0056 of JP 2018-087319 A.

Examples of commercially available products of the acid-modified polyolefin used in the present embodiment include TAFMER (trade name, graft polymer) available from Mitsui Chemicals, Inc., Fusabond (trade name) available from DuPont, and Amplify (trade name) available from Dow Chemical Company.

The content of the acid-modified polyolefin in the resin composition of the present embodiment is, with respect to 100 parts by mass of the polyamide resin, 0.1 parts by mass or more, preferably 1 part by mass or more, more preferably 5 parts by mass or more, still more preferably 8 parts by mass or more, even more preferably 10 parts by mass or more, even still more preferably 12 parts by mass or more, and yet even more preferably 14 parts by mass or more, and may be 16 parts by mass or more and 22 parts by mass or more. Setting the content to equal to or more than the lower limits described above tends to further improve the impact resistance and flexibility of the obtained molded article. In addition, the content of the acid-modified polyolefin is, with respect to 100 parts by mass of the polyamide resin, 50 parts by mass or less, preferably 45 parts by mass or less, more preferably 40 parts by mass or less, still more preferably 35 parts by mass or less, and even more preferably 30 parts by mass or less. Setting the ratio to equal to or lower than the upper limits described above tends result in improved moldability.

The resin composition of the present embodiment may contain only one type of acid-modified polyolefin or may contain two or more types of acid-modified polyolefins. In a case where two or more types of acid-modified polyolefins are contained, the total amount thereof preferably falls within the above-described range.

### Plasticizer

The resin composition of the present embodiment may contain a plasticizer. When the plasticizer is contained, flexibility tends to be improved.

Examples of the plasticizer include an amide-based plasticizer, an ester-based plasticizer, and an amide ester-based plasticizer, and the amide-based plasticizer is preferable.

Examples of the amide-based plasticizer include a carboxylic acid amide-based plasticizer and a sulfonamide-based plasticizer. Examples of the carboxylic acid amide-based plasticizer include amides of one or more types of acids selected from the group consisting of benzoic acid, phthalic acid, trimellitic acid, pyromellitic acid, and anhydrides thereof, and a dialkylamine in which an alkyl group has from 2 to 8 carbon atoms. Examples of the dialkylamine in which the alkyl group has from 2 to 8 carbon atoms include diethylamine, dipropylamine, dibutylamine, dihexylamine, di-2-ethylhexylamine, and dioctylamine.

As the plasticizer used in the present embodiment, N-butylbenzenesulfonamide, N-(2-hydroxypropyl)benzenesulfonamide, N-ethyl-o-toluenesulfonamide, N-ethyl-p-toluenesulfonamide, o-toluenesulfonamide, and p-toluenesulfonamide are preferable, and N-butylbenzenesulfonamide is more preferable.

In the present embodiment, in addition to the above-described, a plasticizer described in paragraph 0039 of JP H07-011131 A can also be used, and the content thereof is incorporated into the present specification.

In a case where the resin composition of the present embodiment contains the plasticizer, the content thereof is preferably 1 part by mass or more, more preferably 2 parts by mass or more, still more preferably 5 parts by mass or more, even more preferably 7 parts by mass or more, and even still more preferably 9 parts by mass or more, with respect to 100 parts by mass of the resin composition. Setting the content to equal to or more than the lower limits described above tends to result in improved flexibility. The upper limit of the content of the plasticizer is preferably 30 parts by mass or less, more preferably 25 parts by mass or less, still more preferably 20 parts by mass or less, even more preferably 15 parts by mass or less, and even still more preferably 12 parts by mass or less, with respect to 100 parts by mass of the resin composition. Setting the upper limit of the content to equal to or less than the upper limits described above tends to result in further improved surface appearance.

The resin composition of the present embodiment may include only one type of plasticizer, or may include two or more types thereof. When two or more types of plasticizers are contained, the total amount thereof preferably falls within the above-described range.

### Other Components

The resin composition of the present embodiment may contain other components without departing from the scope of the present invention. Examples of such additives include reinforcing fillers (glass fibers), mold releasing agents, nucleating agents, light stabilizers, antioxidants, UV absorbers, fluorescent brighteners, anti-dropping agents, antistatic agents, antifogging agents, anti-blocking agents, fluidity improvers, dispersants, antibacterial agents, flame retardants, and copper compounds.

Note that in the resin composition of the present embodiment, the contents of the polyamide resin, the acid-modified polyolefin, and other additives are adjusted in such a manner that the total of the components is 100 mass%.

### Physical Properties of Resin Composition

The resin composition of the present embodiment is preferably excellent in flexibility. Specifically, the resin composition of the present embodiment is molded into an ISO multi-purpose dumbbell test piece (4 mm thick), and the flexural modulus is measured at a temperature of 23°C in accordance with ISO 178. The flexural modulus is preferably 3 GPa or less, more preferably 2.5 GPa or less, still more preferably 2 GPa or less, and even more preferably 1.5 GPa or less. Such a low flexural modulus is achieved by blending the acid-modified polyolefin. The lower limit of the flexural modulus is not particularly determined, but 0.1 GPa or more is practical.

The resin composition of the present embodiment preferably has a high crystallization rate. Specifically, when the resin composition of the present embodiment is molded into an injection-molded piece having a thickness of 1 mmt at a mold temperature of 90°C and crystallized, the molding cycle time is preferably 50 seconds or shorter.

The resin composition of the present embodiment is preferably excellent in cold-temperature impact resistance. Specifically, the resin composition of the present embodiment is molded into an ISO multi-purpose dumbbell test piece (4 mm thick), and the Charpy impact strength (notched, unit: kJ/m²) is measured at a temperature of -40°C in accordance with ISO 179 standard. The Charpy impact strength is preferably 8 kJ/m² or more, more preferably 10 kJ/m² or more, still more preferably 15 kJ/m² or more, and even more preferably 20 kJ/m² or more. The upper limit of the Charpy impact strength is not particularly limited, but 50 kJ/m² or less is practical. Such high cold-temperature impact resistance is achieved by using a predetermined xylylenediamine-based polyamide resin and blending the acid-modified polyolefin.

Details of methods for measuring these physical properties are in accordance with methods described in Examples below.

### Method for Producing Resin Composition

The method for producing a resin composition according to the present embodiment is not particularly limited, but is preferably a method in which a single-screw or twin-screw extruder having a facility capable of devolatilizing from a vent port is used as a kneader. The xylylenediamine-based polyamide resin, the acid-modified polyolefin, and optionally blended other additives may be collectively supplied to the kneader, or the polyamide resin component may be supplied and then the other components to be blended may be sequentially supplied. Further, two or more components selected from all components may be mixed and kneaded in advance.

The production method of a molded article obtained using the resin composition of the present embodiment is not particularly limited, and a molding method commonly used for thermoplastic resins, that is, a molding method such as injection molding, hollow molding, extrusion molding, or press molding can be applied. In this case, injection molding is particularly preferable because of good fluidity. In injection molding, the resin temperature is preferably controlled at 200 to 310°C.

### Applications

The molded article of the present embodiment is formed from the resin composition of the present embodiment.

The molded article of the present embodiment can be widely used as an extrusion-molded article or an injection-molded article.

The molded article of the present embodiment can also be applied to various storage containers, electric/electronic equipment parts, precision equipment parts, office automation (OA) equipment parts, household electrical appliance parts, mechanical mechanism parts, vehicle mechanism parts, and the like. In particular, the molded article of the present embodiment can be made excellent in cold-temperature impact resistance, and is thus suitable for use in cold regions. Specifically, it is suitable for ski boots, shoe soles, and the like. In addition, the molded article of the present embodiment is suitable for hoses, tubes, hydrogen tanks, and the like because it has high flexibility and high chemical resistance, and can reduce an amount of an eluate.

### Examples

The present invention will next be described in more detail with reference to Examples. Materials, amounts used, proportions, processing details, and processing procedures described in the following Examples can be appropriately changed without departing from the spirit of the present invention. Thus, the scope of the present invention is not limited to the specific examples described below.

When a measuring device used in the Examples is not readily available due to, for example, discontinuation, another device with equivalent performance can be used for measurement.

### 1. Raw Material

The following polyamide resins were used.

### Synthesis Example 1: MP12 (30)

In a jacketed reactor equipped with an agitator, a partial condenser, a cooler, a thermometer, a dripping tank, and a nitrogen gas introduction tube, precisely weighed 60 mol of 1,12-dodecanedioic acid was placed, then the reactor was sufficiently purged with nitrogen and the temperature was raised to 180°C under a small amount of nitrogen gas stream, and thus the 1,12-dodecanedioic acid was dissolved to form a uniformly fluidized state. To this, 60 mol of p/m-xylylenediamine containing a diamine component in which 30 mol% was p-xylylenediamine and 70 mol% was m-xylylenediamine was added dropwise over 160 minutes while agitation was performed. During this, the internal pressure of the reaction system was at normal pressure, and the internal temperature was continuously raised to 240°C. The water that distilled out along with the dropwise addition of the p/m-xylylenediamine was removed from the system through the partial condenser and the cooler. After completion of the dropwise addition of the p/m-xylylenediamine, the liquid temperature of 240°C was maintained to continue the reaction for 10 minutes. Thereafter, the internal pressure of the reaction system was continuously reduced to 600 Torr over 10 minutes, and then the reaction was continued for 20 minutes. During this, the reaction temperature was continuously raised to 250°C. After completion of the reaction, by application of a pressure of 0.3 MPa using a nitrogen gas in the reactor, the polymer was taken out as a strand from a nozzle at a bottom part of the polymerization tank and cooled with water. Then, the strand was cut into a pellet shape, and thus pellets of a melt polymerization product were obtained.

The melting point of the obtained polyamide resin (MP12 (30)) was 206°C.

### Synthesis Example 2: Synthesis of MP12 (40)

In a jacketed reactor equipped with an agitator, a partial condenser, a cooler, a thermometer, a dripping tank, and a nitrogen gas introduction tube, precisely weighed 60 mol of 1,12-dodecanedioic acid was placed, then the reactor was sufficiently purged with nitrogen and the temperature was raised to 180°C under a small amount of nitrogen gas stream, and thus the 1,12-dodecanedioic acid was dissolved to form a uniformly fluidized state. To this, 60 mol of p/m-xylylenediamine containing a diamine component in which 40 mol% was p-xylylenediamine and 60 mol% was m-xylylenediamine was added dropwise over 160 minutes while agitation was performed. At this time, the internal pressure of the reaction system was at normal pressure, and the internal temperature was continuously increased to 250°C. The water that distilled out along with the dropwise addition of the p/m-xylylenediamine was removed from the system through the partial condenser and the cooler. After completion of the dropwise addition of the p/m-xylylenediamine, the liquid temperature of 250°C was maintained to continue the reaction for 10 minutes. Thereafter, the internal pressure of the reaction system was continuously reduced to 600 Torr over 10 minutes, and then the reaction was continued for 20 minutes. At this time, the reaction temperature was continuously increased to 260°C. After completion of the reaction, by application of a pressure of 0.3 MPa using a nitrogen gas in the reactor, the polymer was taken out as a strand from a nozzle at a bottom part of the polymerization tank and cooled with water. Then, the strand was cut into a pellet shape, and thus pellets of a melt polymerization product were obtained.

The melting point of the obtained polyamide resin (MP12 (40)) was 216°C.

### Synthesis Example 3: Synthesis of MP14 (30)

In a jacketed reactor equipped with an agitator, a partial condenser, a cooler, a thermometer, a dripping tank, and a nitrogen gas introduction tube, precisely weighed 60 mol of 1,14-tetradecanedioic acid was placed, then the reactor was sufficiently purged with nitrogen and the temperature was raised to 180°C under a small amount of nitrogen gas stream, and thus the 1,14-tetradecanedioic acid was dissolved to form a uniformly fluidized state. To this, 60 mol of p/m-xylylenediamine containing a diamine component in which 30 mol% was p-xylylenediamine and 70 mol% was m-xylylenediamine was added dropwise over 160 minutes while agitation was performed. During this, the internal pressure of the reaction system was at normal pressure, and the internal temperature was continuously raised to 240°C. The water that distilled out along with the dropwise addition of the p/m-xylylenediamine was removed from the system through the partial condenser and the cooler. After completion of the dropwise addition of the p/m-xylylenediamine, the liquid temperature of 240°C was maintained to continue the reaction for 10 minutes. Thereafter, the internal pressure of the reaction system was continuously reduced to 600 Torr over 10 minutes, and then the reaction was continued for 20 minutes. During this, the reaction temperature was continuously raised to 250°C. After completion of the reaction, by application of a pressure of 0.3 MPa using a nitrogen gas in the reactor, the polymer was taken out as a strand from a nozzle at a bottom part of the polymerization tank and cooled with water. Then, the strand was cut into a pellet shape, and thus pellets of a melt polymerization product were obtained.

The melting point of the obtained polyamide resin (MP14 (30)) was 200°C.

### Synthesis Example 4: Synthesis of MXD12

In a jacketed reactor equipped with an agitator, a partial condenser, a cooler, a thermometer, a dripping tank, and a nitrogen gas introduction tube, precisely weighed 60 mol of 1,12-dodecanedioic acid was placed, then the reactor was sufficiently purged with nitrogen and the temperature was raised to 180°C under a small amount of nitrogen gas stream, and thus the 1,12-dodecanedioic acid was dissolved to form a uniformly fluidized state. To this, 60 mol of m-xylylenediamine was added dropwise over 160 minutes while agitation was performed. During this, the internal pressure of the reaction system was at normal pressure, and the internal temperature was continuously raised to 230°C. The water that distilled out along with the dropwise addition of the m-xylylenediamine was removed from the system through the partial condenser and the cooler. After completion of the dropwise addition of the m-xylylenediamine, the liquid temperature of 230°C was maintained to continue the reaction for 10 minutes. Thereafter, the internal pressure of the reaction system was continuously reduced to 600 Torr over 10 minutes, and then the reaction was continued for 20 minutes. During this, the reaction temperature was continuously raised to 240°C. After completion of the reaction, by application of a pressure of 0.3 MPa using a nitrogen gas in the reactor, the polymer was taken out as a strand from a nozzle at a bottom part of the polymerization tank and cooled with water. Then, the strand was cut into a pellet shape, and thus pellets of a melt polymerization product were obtained.

The melting point of the obtained polyamide resin (MXD12) was 186°C.

### Synthesis Example 5: Synthesis of PXD12

In a jacketed reactor equipped with an agitator, a partial condenser, a cooler, a thermometer, a dripping tank, and a nitrogen gas introduction tube, precisely weighed 60 mol of 1,12-dodecanedioic acid was placed, then the reactor was sufficiently purged with nitrogen and the temperature was raised to 180°C under a small amount of nitrogen gas stream, and thus the 1,12-dodecanedioic acid was dissolved to form a uniformly fluidized state. To this, 60 mol of p-xylylenediamine was added dropwise over 160 minutes while agitation was performed. During this, the internal pressure of the reaction system was at normal pressure, and the internal temperature was continuously raised to 290°C. The water that distilled out along with the dropwise addition of the p-xylylenediamine was removed from the system through the partial condenser and the cooler. After completion of the dropwise addition of the p-xylylenediamine, the liquid temperature of 290°C was maintained to continue the reaction for 10 minutes. Thereafter, the internal pressure of the reaction system was continuously reduced to 600 Torr over 10 minutes, and then the reaction was continued for 20 minutes. During this, the reaction temperature was continuously raised to 300°C. After completion of the reaction, by application of a pressure of 0.3 MPa using a nitrogen gas in the reactor, the polymer was taken out as a strand from a nozzle at a bottom part of the polymerization tank and cooled with water. Then, the strand was cut into a pellet shape, and thus pellets of a melt polymerization product were obtained.

The melting point of the obtained polyamide resin (PXD12) was 269°C.

### Synthesis Example 7: Synthesis of MP10 (30)

In a jacketed reactor equipped with an agitator, a partial condenser, a cooler, a thermometer, a dripping tank, and a nitrogen gas introduction tube, precisely weighed 60 mol of sebacic acid was placed, then the reactor was sufficiently purged with nitrogen and the temperature was raised to 180°C under a small amount of nitrogen gas stream, and thus the sebacic acid was dissolved to form a uniformly fluidized state. To this, 60 mol of p/m-xylylenediamine containing a diamine component in which 30 mol% was p-xylylenediamine and 70 mol% was m-xylylenediamine was added dropwise over 160 minutes while agitation was performed. At this time, the internal pressure of the reaction system was at normal pressure, and the internal temperature was continuously increased to 250°C. The water that distilled out along with the dropwise addition of the p/m-xylylenediamine was removed from the system through the partial condenser and the cooler. After completion of the dropwise addition of the p/m-xylylenediamine, the liquid temperature of 250°C was maintained to continue the reaction for 10 minutes. Thereafter, the internal pressure of the reaction system was continuously reduced to 600 Torr over 10 minutes, and then the reaction was continued for 20 minutes. At this time, the reaction temperature was continuously increased to 260°C. After completion of the reaction, by application of a pressure of 0.3 MPa using a nitrogen gas in the reactor, the polymer was taken out as a strand from a nozzle at a bottom part of the polymerization tank and cooled with water. Then, the strand was cut into a pellet shape, and thus pellets of a melt polymerization product were obtained.

The melting point of the obtained polyamide resin (MP10) was 215°C.

### Synthesis Example 8: Synthesis of MXD10

In a jacketed reactor equipped with an agitator, a partial condenser, a cooler, a thermometer, a dripping tank, and a nitrogen gas introduction tube, precisely weighed 60 mol of sebacic acid was placed, then the reactor was sufficiently purged with nitrogen and the temperature was raised to 180°C under a small amount of nitrogen gas stream, and thus the sebacic acid was dissolved to form a uniformly fluidized state. To this, 60 mol of m-xylylenediamine was added dropwise over 160 minutes while agitation was performed. During this, the internal pressure of the reaction system was at normal pressure, and the internal temperature was continuously raised to 240°C. The water that distilled out along with the dropwise addition of the m-xylylenediamine was removed from the system through the partial condenser and the cooler. After completion of the dropwise addition of the m-xylylenediamine, the liquid temperature of 240°C was maintained to continue the reaction for 10 minutes. Thereafter, the internal pressure of the reaction system was continuously reduced to 600 Torr over 10 minutes, and then the reaction was continued for 20 minutes. During this, the reaction temperature was continuously raised to 250°C. After completion of the reaction, by application of a pressure of 0.3 MPa using a nitrogen gas in the reactor, the polymer was taken out as a strand from a nozzle at a bottom part of the polymerization tank and cooled with water. Then, the strand was cut into a pellet shape, and thus pellets of a melt polymerization product were obtained.

The melting point of the obtained polyamide resin (MXD10) was 190°C.

PA6: Polyamide 6, available from Ube Industries, Ltd., product number: UBE Nylon 1022B
PA12: Polyamide 12, available from Ube Industries, Ltd., product number: UBESTA 3024U

The following polyolefin and plasticizer were used.
MH5020: TAFMER MH5020, maleic anhydride-modified ethylene-butene copolymer, available from Mitsui Chemicals, Inc., maleic anhydride modification rate: 1.0 mass%
MH5040: TAFMER MH5040, maleic anhydride-modified ethylene-butene copolymer, available from Mitsui Chemicals, Inc., maleic anhydride modification rate: 2.0 mass%
Plasticizer: N-butylbenzenesulfonamide (BBSA), available from Daihachi Chemical Industry Co., Ltd.

### 2. Examples 1 to 11, Comparative Examples 1 to 4

### Compound

The components were weighed and blended in a tumbler to attain the compositions indicated in Tables 1 to 3 below, and then the mixture was fed from the screw root of a twin-screw extruder (available from Shibaura Machine Co., Ltd., TEM26SS) to be melted, thereby preparing pellets. The temperature of the twin-screw extruder was set to 240 to 280°C.

### Moldability

When the pellets were prepared by the twin-screw extruder (available from Shibaura Machine Co., Ltd., TEM26SS), whether extrusion molding was possible or not was evaluated. Examples of a case where extrusion molding cannot be performed include a case where a resin extruded from a die is torn off before cooling.

Evaluation was made as follows.
5: Extrusion molding was possible.
1: Extrusion molding was impossible.

### Flexibility

The pellets obtained by the above-described production method were dried at 120°C for 4 hours, and then injection-molded into ISO multipurpose dumbbell test pieces (4 mm thick) by an injection-molding machine ("NEX140III" available from Nissei Plastic Industrial Co., Ltd.) under the conditions: a cylinder temperature of 200 to 300°C, a mold temperature of 130°C, and a molding cycle of 50 seconds.

The flexural modulus (unit: GPa) was measured at a temperature of 23°C in accordance with ISO 178.

Evaluation was made as follows.
5: 1.5 GPa or less
4: More than 1.5 GPa and 2.0 GPa or less
3: More than 2.0 GPa and 2.5 GPa or less
2: More than 2.5 GPa and 3.0 GPa or less
1: More than 3.0 GPa

### Crystallization Rate

The pellets obtained by the above-described production method were dried at 120°C for 4 hours, and then injection-molded into three-stage plates by an injection-molding machine ("NEX140III" available from Nissei Plastic Industrial Co., Ltd.) under the conditions: a cylinder temperature of 200 to 300°C and a mold temperature of 90°C.

Evaluation was made as follows.
5: The molding cycle time is 50 seconds or shorter in a case where a molded piece having a thickness of a three-stage plate of 1 mmt is crystallized in the mold
1: The molding cycle time is longer than 50 seconds in a case where a molded piece having a thickness of a three-stage plate of 1 mmt is crystallized in the mold

### Amount of Eluate

A film having a thickness of 100 µm was formed using a film forming machine under the condition of a cylinder temperature of 200 to 300°C.

The film having a thickness of 100 µm was cut into pieces each having a size of 1.5 cm × 20 cm, a mass of 30 film pieces was measured, and the film pieces were put together in a 110 mL-sample bottle. Thereafter, a mixed solvent (15 mL) composed of toluene (45 vol.%), isooctane (45 vol.%), and ethanol (10 vol.%) was added, a cap was put on, and the mixed solution was stored at 40°C for 200 hours. The mixed solution was then transferred to a beaker and allowed to stand for one day. After standing, suction filtration (filter paper: PTFE, pore diameter: 0.2 µm) was performed, and a mass of the obtained solid eluate was measured. A value obtained by dividing the mass of the solid eluate by the mass of the film pieces (mg/g) was defined as an amount of the eluate.
5: 0.1 mg/g or less
4: More than 0.1 mg/g and 0.2 mg/g or less
3: More than 0.2 mg/g and 0.3 mg/g or less
2: More than 0.3 mg/g and 0.4 mg/g or less
1: More than 0.4 mg/g

### Chemical Resistance

The pellets obtained by the above-described production method were dried at 120°C for 4 hours, and then injection-molded into ISO multipurpose dumbbell test pieces (4 mm thick) by an injection-molding machine ("NEX140III" available from Nissei Plastic Industrial Co., Ltd.) under the conditions: a cylinder temperature of 200 to 300°C, a mold temperature of 130°C, and a molding cycle of 50 seconds.

The flexural modulus (unit: GPa) was measured at a temperature of 23°C in accordance with ISO 178.

The test piece was immersed in 10 mass% hydrochloric acid for 7 days, and the flexural modulus was measured again. The ratio (%) of the flexural modulus after immersion in hydrochloric acid to the initial flexural modulus was defined as a flexural modulus retention rate.

Evaluation was made as follows.
5: 80% or more
4: 70% or more and less than 80%
3: 60% or more and less than 70%
2: 50% or more and less than 60%
1: Less than 50%

### Cold-Temperature Impact Resistance

The pellets obtained by the above-described production method were dried at 120°C for 4 hours, and then injection-molded into ISO multipurpose dumbbell test pieces (4 mm thick) by an injection-molding machine ("NEX140III" available from Nissei Plastic Industrial Co., Ltd.) under the conditions: a cylinder temperature of 200 to 300°C, a mold temperature of 130°C, and a molding cycle of 50 seconds.

The Charpy impact strength (notched, unit: kJ/m²) was measured at a temperature of - 40°C in accordance with the ISO 179 standard.

Evaluation was made as follows.
5: 20 kJ/m² or more
4: 15 kJ/m² or more and less than 20 kJ/m²
3: 10 kJ/m² or more and less than 15 kJ/m²
2: 8 kJ/m² or more and less than 10 kJ/m²
1: Less than 8 kJ/m²

**[Table 1]**

| | Example 1 | Example 2 | Example 3 | Example 4 | Example 5 |
|---|---|---|---|---|---|
| Polyamide resin type | MP12 (30) | MP12 (30) | MP12 (30) | MP12 (30) | MP12 (30) |
| Polyolefin type | MH5020 | MH5020 | MH5020 | MH5020 | MH5020 |
| Polyolefin content (mass%) | 10 | 13.5 | 15 | 20 | 25 |
| Plasticizer content (parts by mass) | 0 | 0 | 0 | 0 | 0 |
| | | | | | |
| Moldability | 5 | 5 | 5 | 5 | 5 |
| Flexibility | 4 | 4 | 4 | 5 | 5 |
| Crystallization rate | 5 | 5 | 5 | 5 | 5 |
| Eluate amount | 5 | 5 | 5 | 5 | 5 |
| Chemical resistance | 5 | 5 | 5 | 5 | 5 |
| Cold-temperature impact resistance | 3 | 3 | 4 | 4 | 5 |

**[Table 2]**

| | Example 6 | Example 7 | Example 8 | Example 9 | Example 10 |
|---|---|---|---|---|---|
| Polyamide resin type | MP12 (40) | MP14 (30) | MXD12 | PXD12 | MP12 (30) |
| Polyolefin type | MH5020 | MH5020 | MH5020 | MH5020 | MH5040 |
| Polyolefin content (mass%) | 13.5 | 13.5 | 13.5 | 13.5 | 20 |
| Plasticizer content (parts by mass) | 0 | 0 | 0 | 0 | 0 |
| | | | | | |
| Moldability | 5 | 5 | 5 | 5 | 5 |
| Flexibility | 4 | 5 | 4 | 5 | 5 |
| Crystallization rate | 5 | 5 | 5 | 5 | 5 |
| Eluate amount | 5 | 5 | 5 | 5 | 5 |
| Chemical resistance | 5 | 5 | 5 | 5 | 5 |
| Cold-temperature impact resistance | 4 | 3 | 3 | 5 | 4 |

**[Table 3]**

| | Example 11 | Comparative Example 1 | Comparative Example 2 | Comparative Example 3 | Comparative Example 4 |
|---|---|---|---|---|---|
| Polyamide resin type | MP12 (30) | MP10 (30) | MXD10 | PA6 | PA12 |
| Polyolefin type | MH5020 | MH5020 | MH5020 | - | - |
| Polyolefin content (mass%) | 25 | 15 | 15 | 0 | 0 |
| Plasticizer content (parts by mass) | 10 | 0 | 0 | 0 | 0 |
| | | | | | |
| Moldability | 5 | 5 | 5 | 5 | 5 |
| Flexibility | 5 | 4 | 4 | 2 | 5 |
| Crystallization rate | 5 | 1 | 1 | 5 | 5 |
| Eluate amount | 5 | 4 | 3 | 4 | 1 |
| Chemical resistance | 5 | 5 | 5 | 1 | 5 |
| Cold-temperature impact resistance | 4 | 1 | 1 | 1 | 1 |

In Tables 1 to 3 described above, the content of the polyolefin is a content (mass%) of the polyolefin when the total amount of the resin composition is 100 mass%. The content of the plasticizer is a content (parts by mass) of the plasticizer when the total amount of the resin composition is 100 parts by mass.

In the resin composition of the present embodiment, crystallization of the molded article was observed even when the mold temperature was 90°C (Examples 1 to 11). Furthermore, a molded article excellent in flexibility, cold-temperature impact resistance, gas barrier properties, and the like was obtained.

## Claims

1. A resin composition, comprising from 0.1 to 50 parts by mass of an acid-modified polyolefin with respect to 100 parts by mass of a polyamide resin, the polyamide resin comprising a diamine unit and a dicarboxylic acid unit, the diamine unit comprising 70 mol% or more of structural units derived from a xylylenediamine, and the dicarboxylic acid unit comprising 70 mol% or more of structural units derived from an α,ω-linear aliphatic dicarboxylic acid having from 11 to 20 carbon atoms.

2. The resin composition according to claim 1, wherein 70 mol% or more of the dicarboxylic acid unit is derived from dodecanedioic acid and/or tetradecanedioic acid.

3. The resin composition according to claim 1, wherein 70 mol% or more of the dicarboxylic acid unit is derived from dodecanedioic acid.

4. The resin composition according to any one of claims 1 to 3, wherein from 20 to 100 mol% of the diamine unit is derived from m-xylylenediamine, and from 80 to 0 mol% of the diamine unit is derived from p-xylylenediamine.

5. The resin composition according to claim 1, wherein 70 mol% or more of the dicarboxylic acid unit is derived from dodecanedioic acid and/or tetradecanedioic acid, and
from 20 to 100 mol% of the diamine unit is derived from m-xylylenediamine, and from 80 to 0 mol% of the diamine unit is derived from p-xylylenediamine.

6. The resin composition according to any one of claims 1 to 5, wherein the acid-modified polyolefin comprises a maleic anhydride-modified polyolefin.

7. A molded article comprising the resin composition described in any one of claims 1 to 6.
